# EUROPÄISCHE PATENTSCHRIFT

(11) **EP 3 380 212 B1**
(45) Veröffentlichungstag und Bekanntmachung des Hinweises auf die Patenterteilung: **05.05.2021**
(21) Anmeldenummer: 16790880.5
(22) Anmeldetag: 28.10.2016
(51) Int. Cl.: B01D 35/157, B01D 29/23, B01D 29/52, B01D 29/66

(54) **FILTERVORRICHTUNG**
FILTER APPARATUS
DISPOSITIF DE FILTRATION

(30) Priorität: 25.11.2015 DE 102015015237
(43) Veröffentlichungstag der Anmeldung: 03.10.2018
(73) Patentinhaber: Hydac Process Technology GmbH, 66538 Neunkirchen (DE)
(72) Erfinder: WNUK, Ralf, 66450 Bexbach/Kleinottweiler (DE); OLSCHOK, Markus, 66540 Neunkirchen (DE); SCHINDLER, Christian, 66578 Schiffweiler (DE)
(74) Vertreter: Bartels, Martin Erich Arthur
(86) Internationale Anmeldenummer: PCT/EP2016/001805
(87) Internationale Veröffentlichungsnummer: WO 2017/088949

(56) Entgegenhaltungen:
- WO-A1-2012/079661
- DE-A1-102011 100 518
- DE-B1- 1 486 812
- DE-T5-112012 004 992

## Beschreibung

Die Erfindung betrifft eine Filtervorrichtung mit den Merkmalen im Oberbegriff des Anspruchs 1.

Filtervorrichtungen dieser Art sind Stand der Technik und kommen auf einer Vielzahl unterschiedlichster Einsatzgebiete und für die Filtration verschiedenster strömungsfähiger Medien zum Einsatz, wobei je nach Anwendungsgebiet unterschiedliche Bauweisen der Vorrichtung in Frage kommen. Bevorzugte Anwendungsgebiete sind die Reinigung von Fluiden, wie Hydraulikflüssigkeiten, Schmier- oder Kraftstoffen. Ebenso können derartige Vorrichtungen für Wasseraufbereitung benutzt werden oder in Verbindung mit Prozess- oder Arbeitsfluiden anderer Natur. Um einen störungsfreien Betrieb des angeschlossenen, mit dem Filtrat zu versorgenden Systems zu gewährleisten, ist es unerlässlich, die die Filtration durchführenden Filterelemente nacheinander durch Rückspülen zu regenerieren, wobei während jeweiliger Rückspülphasen ein Teilstrom des Filtrats das zu regenerierende Filterelement in umgekehrter Richtung durchströmt, um den Schmutz vom Element abzulösen und auszutragen. Um beim Rückspülvorgang auch hartnäckigere Verschmutzungen entfernen zu können, ist es bekannt, den Rückspülvorgang nicht ausschließlich durch Ausnutzung des Betriebs- oder Systemdrucks durchzuführen, sondern den Rückspülvorgang mittels einer Drucksteuereinrichtung zu unterstützen.

Als diesbezüglichen Stand der Technik offenbart das Dokument WO 2012/ 079661 A1 eine Filtervorrichtung der eingangs genannten Gattung. Die Drucksteuereinrichtung weist einen hydropneumatischen Kolbenspeicher auf, dessen Speicherkolben das bewegbare Trennelement zwischen einer Gasseite und einer Fluidseite bildet, die mit der Filtratseite im Filtergehäuse der Filtervorrichtung verbunden ist. Die Filterelemente sind im Filtergehäuse derart drehbar angeordnet, dass ein zu regenerierendes Filterelement mit seiner Rohseite auf einen Rückspülausgang ausrichtbar ist, an dem sich ein Rückspülventil befindet. Um den Rückspülvorgang für dieses Filterelement auszulösen, wird das Rückspülventil geöffnet, wodurch für den Rückspülvorgang das Volumen der Fluidseite mit dem Speicherdruck des Kolbenspeichers als Druckgradient zum Ablösen der Verschmutzungen zur Verfügung steht.

Die DE 11 2012 004 992 T5 offenbart eine Filtervorrichtung mit einer Mehrzahl von Filterelementen, die in einem Filtergehäuse mit einem Filtereinlass für zu filtrierendes Fluid und einem Filterauslass für das gefilterte Fluid aufnehmbar sind, wobei während des Betriebs der Vorrichtung zumindest eines der Filterelemente zum Abreinigen seiner wirksamen Filterfläche mittels einer Rückspüleinrichtung rückspülbar ist, die eine Drucksteuereinrichtung zur Unterstützung der Rückspülung beinhaltet, wobei die Filterelemente jeweils in einem Elementgehäuse aufgenommen sind, wobei die Elementgehäuse mit den den Filtrationsvorgang wahrnehmenden Filterelementen mit ihrem einen offenen Ende mit dem Filterauslass fluidführend in Verbindung stehen, wobei das Elementgehäuse des jeweils rückspülbaren Filterelements mit seinem einen offenen Ende ausschließlich an die Drucksteuereinrichtung angeschlossen ist, und wobei bei geschlossenem Kopfende des Filterelements, ein an dessen Außenseite befindlicher Strömungsraum über das obere offene Ende des Elementgehäuses in einen gemeinsamen Filtratraum ausmündet, der an den Filterauslass angeschlossen ist.

Die DE 1 486 812 und die DE 10 2011 100 518 A1 beschreiben weitere Filtervorrichtungen.

Ausgehend von diesem Stand der Technik stellt sich die Erfindung die Aufgabe, eine Filtervorrichtung zur Verfügung zu stellen, die sich durch ein besonders günstiges Betriebsverhalten auszeichnet.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Patentanspruchs 1 zeichnet sich die Erfindung dadurch aus, dass alle Filterelemente mit ihren Elementgehäusen endseitig in Drehaufnahmen in einem Filtratraum gelagert sind, die mittels eines Drehantriebes von einer Filtrationsstellung in eine Rückspülstellung und wieder in eine Filtrationsstellung bringbar sind, dass zwischen der Drucksteuereinrichtung und dem Filtratraum mit den Drehaufnahmen eine Trennwand im Filtergehäuse gezogen ist, die einen Durchgang aufweist, auf den das für einen Rückspülvorgang vorgesehene Filterelement ausgerichtet ist, und dass die Drucksteuereinrichtung ein Speicherteil mit einem Arbeitsgas befüllbaren Druckraum und einem eine Rückspülmenge aufnehmenden Fluidraum aufweist.

Für die einzelnen Filterelemente ist daher ein schneller und sicherer Wechsel der Betriebsart zwischen Filtration und Rückspülung möglich.

Mit besonderem Vorteil weist die Drucksteuereinrichtung das Speicherteil mit dem mit Arbeitsgas befüllbaren Druckraum und dem eine Rückspülmenge aufnehmenden Fluidraum auf. Dadurch lässt sich mit verhältnismäßig geringem konstruktiven Aufwand ein für einen optimalen Rückspülvorgang ausreichend großes Fluidvolumen mit gewünschtem Druckniveau zur Verfügung stellen.

Ferner besteht eine wesentliche Besonderheit der Erfindung darin, dass die Filterelemente jeweils in einem Elementgehäuse aufgenommen sind, dass die Elementgehäuse mit den den Filtrationsvorgang wahrnehmenden Filterelementen mit ihrem einen offenen Ende mit dem Filterauslass fluidführend in Verbindung stehen und dass das Elementgehäuse des jeweiligen rückspülbaren Filterelements mit seinem einen offenen Ende ausschließlich an die Drucksteuereinrichtung angeschlossen ist. Bei dieser durch die Elementgehäuse gebildeten Kammerung der Filterelemente ist der den Rückspülvorgang unterstützende Druck der Drucksteuereinrichtung ausschließlich an dem zu regenerierenden, in der Rückspülposition befindlichen Element wirksam. Die den Filtrationsvorgang wahrnehmenden Filterelemente bleiben daher vom Rückspüldruck der Drucksteuereinrichtung völlig unbeeinflusst, so dass diese Filterelemente den Filtrationsvorgang auch während Rückspülphasen unter dem Einfluss des Systemdrucks normal durchführen, während der Rückspülvorgang mit einem demgegenüber höheren, eine besonders wirksame Schmutzablösung ermöglichenden Rückspüldruck durchgeführt werden kann.

Bei vorteilhaften Ausführungsbeispielen sind die jeweiligen Elementgehäuse aus einem Hohlzylinder mit geschlossener Mantelfläche ausgebildet, wobei das andere freie Ende der Elementgehäuse eine von dem jeweils aufgenommenen Filterelement begrenzte Öffnung aufweist. Diesbezüglich kann die Anordnung so getroffen sein, dass das Filterelement an die Öffnung derart angrenzt, dass diese eine Fluidverbindung zum Inneren, vom Filtermedium umfassten Hohlraum des Filterelements bildet.

Mit besonderem Vorteil kann das jeweilige Filterelement konisch ausgebildet sein und in Richtung der Drucksteuereinrichtung seinen kleinsten Durchmesser aufweisen. Bei solchen Filterelementen, auch Filterkerzen genannt, handelt es sich vorzugsweise um bekannte Spaltsiebrohr-Filterelemente.

Dabei kann die Anordnung mit Vorteil so getroffen sein, dass sich der Strömungsraum zwischen Elementgehäuse und aufgenommenem Filterelement in Richtung der Drucksteuereinrichtung konisch erweitert, wobei der freie Querschnitt des Strömungsraums am oberen Ende des jeweiligen Filterelements 50 bis 120 %, vorzugsweise 100 %, der Eintrittsfläche der Elementkappe des Filterelements beträgt. Diese Gestaltung führt zu einem besonders günstigen Strömungsverlauf des Fluidstroms, so dass beim Rückspülvorgang auch hartnäckige Verschmutzungen ablösbar sind.

Die den Filtrationsvorgang wahrnehmenden Filterelemente können in vorteilhafter Weise jeweils von innen nach außen durchströmt werden und bodenseitig an einen allen gemeinsamen Unfiltratraum im Filtergehäuse angeschlossen sein, in den der Filtereinlass einmündet, wobei bei geschlossenem Kopfende des Filterelements der an dessen Außenseite befindliche Strömungsraum über das obere offene Ende des Elementgehäuses in einen gemeinsamen Filtratraum ausmündet, der an den Filterauslass angeschlossen ist.

Bei dieser Anordnung wird das jeweilige, den Rückspülvorgang wahrnehmende Filterelement von außen nach innen durchströmt und ist mit seinem Elementgehäuse kopfseitig an die Drucksteuereinrichtung angeschlossen sowie bodenseitig über das freie Elementende an ein Schmutzablassventil fluidführend angeschlossen.

Mit besonderem Vorteil können die mittels des Drehantriebs schwenkbaren Drehaufnahmen mit den Filterelementen mit ihren Elementgehäusen konzentrisch und mit einem vorgebbaren Abstand im Filtratraum des Filtergehäuses aufgenommen sein. Mit einer derartigen Anordnung der Filterelemente in der Art eines Elementrevolvers lässt sich eine besonders kompakte Filtervorrichtung hoher Filterleistung realisieren.

Bei besonders vorteilhaften Ausführungsbeispielen ist das Speicherteil als Kolbenspeicher ausgebildet, bei dem für eine Medientrennung zwischen dem im Druckraum befindlichen Arbeitsgas und dem Fluid ein bewegbarer Speicherkolben angeordnet ist.

Mit Vorteil kann die Anordnung hierbei so getroffen sein, dass die Trennwand eine Drosselstelle aufweist, die fluidführend den einen unteren Kolbenraum des mit dem Speicherkolben gebildeten Kolbenspeichers mit dem Filtratraum fluidführend verbindet. Die Fluidseite des Kolbenspeichers ist dadurch während den Phasen des normalen Filtrationsbetriebs über die Drosselstelle selbsttätig mit einem Filtratvolumen nachfüllbar, das für einen nachfolgenden Rückspülvorgang zur Verfügung steht, bei dem der Speicherkolben durch Einleitung eines Druckmediums, wie Druckluft, in die Gasseite angetrieben wird, um das angesammelte Fluidvolumen aus der Fluidseite des Speichers auszutreiben.

Nachstehend ist die Erfindung anhand eines in der Zeichnung dargestellten Ausführungsbeispiels im Einzelnen erläutert. Es zeigen:
- Fig. 1: eine in perspektivischer Schrägansicht und in Längsrichtung aufgeschnitten gezeichnete Darstellung eines Ausführungsbeispiels der erfindungsgemäßen Filtervorrichtung; und
- Fig. 2: einen Längsschnitt des Ausführungsbeispiels, wobei ein oberer Gehäusedeckel, ein Schmutzablassventil und der Motor eines Drehantriebs weggelassen sind.

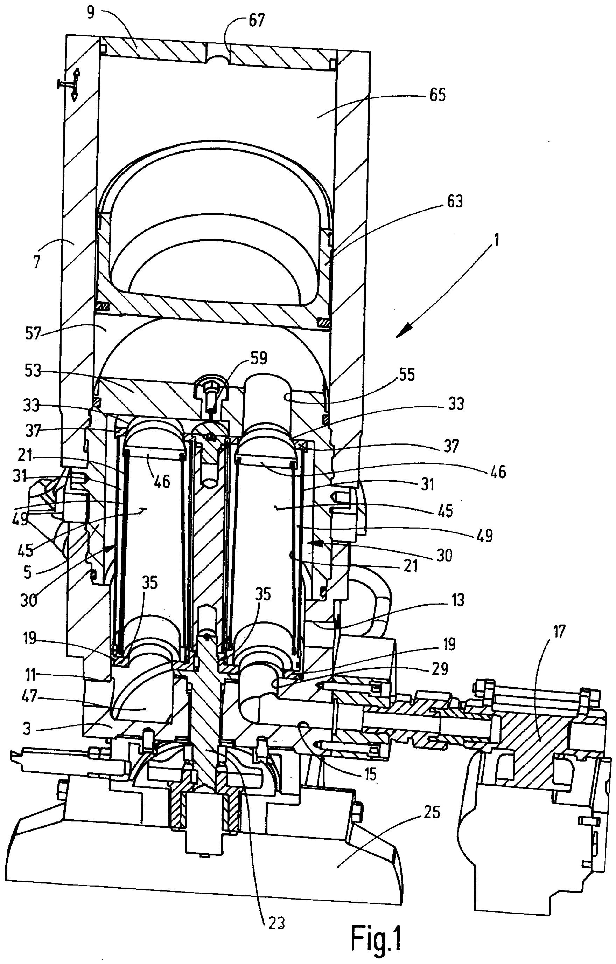

In den Figuren ist das Gehäuse des dargestellten Ausführungsbeispiels der erfindungsgemäßen Filtervorrichtung als Ganzes mit 1 bezeichnet. Das Gehäuse 1 ist dreiteilig ausgebildet und besteht aus einem Bodenteil 3, einem Mittelteil 5 und einem oberen Speicherteil 7, die, fluiddicht abgedichtet, miteinander verschraubt sind. Das obere Speicherteil 7 ist am oberen Ende durch einen nur in Fig. 1 gezeigten Gehäusedeckel 9 fluiddicht geschlossen. Die Teile 3, 5 und 7 umfassen jeweils einen kreiszylindrischen Abschnitt des Gehäuseinnenraums. Das Bodenteil 3 weist in der Nähe seines geschlossenen unteren Endes einen Filtereinlass 11 für zu filtrierendes Fluid, und zum Filtereinlass 11 gegenüberliegend und zu diesem nach oben versetzt, einen Filterauslass 13 für das gefilterte Fluid auf. Dem Filtereinlass 11 diametral gegenüberliegend befindet sich am Bodenteil 3 außerdem ein Schmutzauslass 15, über den bei einem Rückspülvorgang die jeweilige Rückspül-Fluidmenge über ein angeschlossenes Schmutzablassventil 17 aus der Vorrichtung abführbar ist. Das Schmutzablassventil 17 ist durch ein Motorventil üblicher Bauweise gebildet.

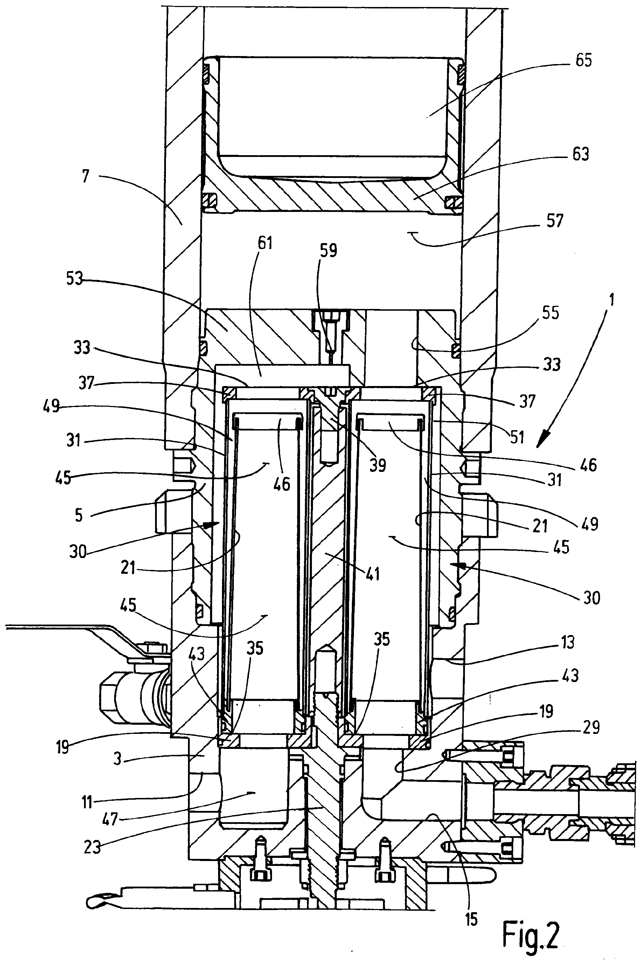

In entsprechender Weise wie bei der erwähnten, dem Stand der Technik entsprechenden Vorrichtung (WO 2012/079661 A1) ist in dem Innenraum, der vom Bodenteil 3 und vom Mittelteil 5 gemeinsam umfasst ist, ein Drehantrieb vorgesehen, mit Drehaufnahmen 19, die mit auf ihnen gelagerten Filterelementen 21 einen Elementrevolver bilden. Die aus konischen Filterkerzen gebildeten Filterelemente 21, insbesondere in Form sog. Spaltsiebrohr-Filterelemente, sind, wie bei der erwähnten, bekannten Lösung entlang eines Kreisbogens innerhalb des Filtergehäuses 1 um die Hochachse gruppiert. Für eine schrittweise Drehbewegung der Filterelemente 1 um die Hochachse sind die Drehaufnahmen 19 über eine Antriebswelle 23 mit einem nur in Fig. 1 gezeigten Antriebsmotor 25 (hydraulisch oder elektrisch) verbunden, der absatzweise Drehbewegungen der Welle 23 erzeugt, um die Drehaufnahmen 19 schrittweise in Drehpositionen zu drehen, bei denen die Drehaufnahmen 19 mit den die Filtration vornehmenden Filterelementen 21 jeweils auf einen Unfiltratraum 47 ausgerichtet sind, in den der Fluideinlass 11 einmündet, und diejenige Drehaufnahme 19 mit dem für die Rückspülung vorgesehenen Filterelement 21 auf einen Schmutzabfuhrkanal 29 im Bodenteil 3 ausgerichtet ist, der zum Schmutzablass 15 führt. Jedes der Filterelemente 21 ist in einem Elementgehäuse 30 aufgenommen, dessen Hauptteil durch einen Hohlzylinder 31 mit geschlossener Mantelfläche gebildet ist, der sich zwischen einem oberen offenen Ende 33 und einem unteren offenen Ende 35 des Elementgehäuses 30 erstreckt. Am oberen offenen Ende 33 befindet sich am Ende der Hohlzylinder 31 jeweils ein Ringkörper 37, die über eine Schraube 39 mit einem eine koaxiale Verlängerung der Antriebswelle 23 bildenden Träger 41 verbunden sind. Am unteren offenen Ende 35 der Elementgehäuse 30 sind Filterelementkappen 43 (Fig. 2) vorgesehen, die jeweils fluiddicht mit der zugeordneten Drehaufnahme 19 verbunden sind.

Bei dieser Anordnung ist der innere Filterhohlraum 45 der die Filtration vornehmenden Filterelemente 21 über das untere offene Ende 35 jeweils mit dem Unfiltratraum 47 in Verbindung, in den der Fluideinlass 11 einmündet. Die Filtration findet dadurch vom inneren Hohlraum 45 her, der am oberen Ende durch einen Endkörper 46 geschlossen ist, nach außen durch die Filterelemente 21 hindurch statt, so dass der Strömungsraum 49 zwischen Elementgehäuse 30 und der Außenseite des aufgenommenen Filterelements 21 die jeweilige Reinseite bildet, wobei der sich nach oben hin konisch verjüngende Strömungsraum 49 über das durch die Ringkörper 37 gebildete obere offene Ende der Elementgehäuse 30 mit einem gemeinsamen Filtratraum 51 in Verbindung ist, an den wiederum der Fluidauslass 13 angeschlossen ist.

Das Gehäusemittelteil 5 weist am den Übergang zum Speicherteil 7 bildenden oberen Ende eine Trennwand 53 auf. In dieser befindet sich an einer Stelle, die auf das jeweils für einen Rückspülvorgang vorgesehene Filterelement 21 ausgerichtet ist, ein Durchgang 55. Über diesen ist der an die Trennwand 53 angrenzende Druckraum 57 des Speicherteils 7 über das obere offene Ende 33 des das rückzuspülende Filterelement 21 enthaltenden Elementgehäuses 30 mit dem Strömungsraum 49 an der Außenseite dieses Filterelements 21 verbunden. Dieser Druckraum 57 ist außerdem über eine in der Trennwand 53 befindliche Drosselstelle 59 mit dem oberen Bereich 61 des Filtratraums 51 in Verbindung. Wie erwähnt und nur in Fig. 1 dargestellt, ist das obere Ende des Speicherteils 7 durch ein Deckelteil 9 geschlossen. Mit einem im Speicherteil 7 längsverfahrbar frei beweglichen Speicherkolben 63 bildet das Speicherteil 7 dadurch einen Kolbenspeicher, bei dem der unterhalb des Kolbens 63 befindliche Druckraum 57 die Fluidseite und der zwischen Kolben 63 und Deckelteil 9 befindliche Raum 65 die Gasseite bildet, die über einen im Deckelteil 9 befindlichen Anschluss 67 mit einem Arbeitsgas, wie Druckluft, befüllbar ist. Zu diesem Zweck ist am Anschluss 67 eine in der Zeichnung nicht näher dargestellte, dem Stand der Technik entsprechende Druckversorgungseinrichtung angeschlossen, wie sie bei der erwähnten, bekannten Filtervorrichtung (WO 2012/079661 A1) vorgesehen ist und eine Ventileinrichtung aufweist, die es ermöglicht, den Raum 65 mit Druckluft über eine Druckluftleitung zu versorgen oder die Druckluftzufuhr zu sperren, während der Raum 65 über eine Filter/Drossel-Einrichtung mit der Umgebung verbunden ist.

Bei dieser Anordnung ist der die Fluidseite bildende Druckraum 57 des im Speicherteil 7 gebildeten Kolbenspeichers über die Drosselstelle 59, an der der Systemdruck des Filtratraums 51 ansteht, mit Filtrat befüllbar, wobei der Speicherkolben 63 sich bei belüftetem gasseitigen Raum 65 nach oben bewegt. Um einen Rückspülvorgang bei dem auf die Rückspülposition ausgerichteten Filterelement 21 einzuleiten, wie es bei dem in den Figuren rechtsseitig sichtbaren Filterelement 21 der Fall ist, wird der gasseitige Raum 65 des Kolbenspeichers mit Druckluft auf ein Druckniveau geladen, das dem gewünschten Rückspüldruck entspricht. Bei nun geöffnetem Schmutzablassventil 1 7 treibt der Speicherkolben 63 das im Raum 57 angesammelte Fluidvolumen als Rückspülmenge durch den Durchgang 55 und das obere offene Ende 33 des in Rückspülposition befindlichen Elementgehäuses 30 in den Strömungsraum 49 an der Außenseite des Filterelements 21 hinein, so dass dieses unter dem Rückspüldruck von außen zum inneren Hohlraum 45 hin durchströmt wird.

Bei diesem Rückspülvorgang, der mit vom Kolbenspeicher geliefertem Rückspüldruck erfolgt, der wesentlich höher gewählt sein kann als der Systemdruck, werden auch hartnäckige Verschmutzungen abgelöst, um über das untere offene Ende 35 des betreffenden Elementgehäuses 30 und über den Abfuhrkanal 29 ausgetragen zu werden. Wird nach erfolgter Rückspülung das Schmutzablassventil 17 geschlossen und der gasseitige Raum 65 oberhalb des Speicherkolbens 63 wieder zur Umgebung über eine Drossel belüftet, erfolgt eine erneute Befüllung des fluidseitigen Raums 57 aus dem Filtratraum 51 über die Drosselstelle 59 aufgrund des Systemdrucks, während die nicht auf die Rückspülposition eingestellten Filterelemente 21 die Filtration vornehmen. Da diese Filterelemente 21 durch ihr Elementgehäuse 30 vollständig von dem den Rückspüldruck führenden Druckraum 57 des Kolbenspeichers getrennt sind, erfolgt die Filtration bei den nicht rückgespülten Filterelementen 21 völlig ungestört und ohne Beeinträchtigung durch den am rückgespülten Filterelement 21 wirksamen Rückspüldruck.

Die Unterstützung des Rückspülvorgangs durch die Drucksteuerung könnte auch ohne die durch den Speicherkolben 63 des Speicherteils 7 gebildete Medientrennung in der Weise erfolgen, dass das Arbeitsgas des Speicherteils 7 direkt auf das Fluid wirkt. Hierzu ist der Speicherkolben 63 aus dem Raum 57 des Speichergehäuses zu entfernen und direkt an eine externe Druckquelle, wie eine Stickstoffquelle anzuschließen, die mittels einer nicht näher dargestellten Ventileinrichtung gesteuert definierte Druckmengen in den Raum 57 abgibt.

## Patentansprüche

1. Filtervorrichtung mit einer Mehrzahl von Filterelementen (21), die in einem Filtergehäuse (1) mit einem Filtereinlass (11) für zu filtrierendes Fluid und einem Filterauslass (13) für das gefilterte Fluid aufnehmbar sind, wobei während des Betriebs der Vorrichtung zumindest eines der Filterelemente (21) zum Abreinigen seiner wirksamen Filterfläche mittels einer Rückspüleinrichtung rückspülbar ist, die eine Drucksteuereinrichtung (7) zur Unterstützung der Rückspülung beinhaltet, wobei die Filterelemente (21) jeweils in einem Elementgehäuse (30) aufgenommen sind, wobei die Elementgehäuse (30) mit den den Filtrationsvorgang wahrnehmenden Filterelementen (21) mit ihrem einen offenen Ende (33) mit dem Filterauslass (13) fluidführend in Verbindung stehen, wobei das Elementgehäuse (30) des jeweils rückspülbaren Filterelements (21) mit seinem einen offenen Ende (33) ausschließlich an die Drucksteuereinrichtung (7) angeschlossen ist, **dadurch gekennzeichnet, dass** alle Filterelemente (21) mit ihren Elementgehäusen (30) endseitig in Drehaufnahmen (19) in einem Filtratraum (51) gelagert sind, die mittels eines Drehantriebes (25) von einer Filtrationsstellung in eine Rückspülstellung und wieder in eine Filtrationsstellung bringbar sind, dass zwischen der Drucksteuereinrichtung (7) und dem Filtratraum (51) mit den Drehaufnahmen (19) eine Trennwand (53) im Filtergehäuse (1) gezogen ist, die einen Durchgang (55) aufweist, auf den das für einen Rückspülvorgang vorgesehene Filterelement (21) ausgerichtet ist, und dass die Drucksteuereinrichtung ein Speicherteil (7) mit einem Arbeitsgas befüllbaren Druckraum (65) und einem eine Rückspülmenge aufnehmenden Fluidraum (57) aufweist.

2. Filtervorrichtung nach Anspruch 1, **dadurch gekennzeichnet, dass** die jeweiligen Elementgehäuse (30) aus einem Hohlzylinder (31) mit geschlossener Mantelfläche ausgebildet sind und an ihrem anderen freien Ende (35) eine von dem jeweils aufgenommenen Filterelement (21) begrenzte Öffnung (43) aufweisen.

3. Filtervorrichtung nach Anspruch 1 oder 2, **dadurch gekennzeichnet, dass** das jeweilige Filterelement (21) konisch ausgebildet ist und in Richtung der Drucksteuereinrichtung (7) seinen kleinsten Durchmesser aufweist.

4. Filtervorrichtung nach einem der vorstehenden Ansprüche, **dadurch gekennzeichnet, dass** sich der Strömungsraum (49) zwischen Elementgehäuse (30) und aufgenommenem Filterelement (21) in Richtung der Drucksteuereinrichtung (7) konisch erweitert und dass der freie Querschnitt des Strömungsraums (49) am oberen Ende des jeweiligen Filterelements (21) 50 bis 120 %, vorzugsweise 100 %, der Eintrittsfläche der Elementkappe (43) des Filterelements (21) beträgt.

5. Filtervorrichtung nach einem der vorstehenden Ansprüche, **dadurch gekennzeichnet, dass** die den Filtrationsvorgang wahrnehmenden Filterelemente (21) jeweils von innen nach außen durchströmt werden und bodenseitig an einen gemeinsamen Unfiltratraum (47) im Filtergehäuse (1) angeschlossen sind, in den der Filtereinlass (11) einmündet, und dass bei geschlossenem Kopfende (46) des Filterelements (21), der an dessen Außenseite befindliche Strömungsraum (49) über das obere offene Ende (33) des Elementgehäuses (30) in einen gemeinsamen Filtratraum (51) ausmündet, der an den Filterauslass (13) angeschlossen ist.

6. Filtervorrichtung nach einem der vorstehenden Ansprüche, **dadurch gekennzeichnet, dass** das jeweilige, den Rückspülvorgang wahrnehmende Filterelement (21) von außen nach innen durchströmt wird und mit seinem Elementgehäuse (30) kopfseitig an die Drucksteuereinrichtung (7) angeschlossen ist sowie bodenseitig über das freie Elementende (35) an ein Schmutzablassventil (17) fluidführend angeschlossen ist.

7. Filtervorrichtung nach einem der vorstehenden Ansprüche, **dadurch gekennzeichnet, dass** die mittels des Drehantriebs (25) schwenkbaren Drehaufnahmen (19) mit den Filterelementen (21) nebst ihren Elementgehäusen (30) konzentrisch und mit einem vorgebbaren Abstand im Filtratraum (51) des Filtergehäuses (1) aufgenommen sind.

8. Filtervorrichtung nach einem der vorstehenden Ansprüche, **dadurch gekennzeichnet, dass** das Speicherteil (7) als Kolbenspeicher mit einem ein bewegliches Trennelement zwischen Druckraum (65) und Fluidraum (57) bildenden Speicherkolben (63) ausgebildet ist.

9. Filtervorrichtung nach einem der vorstehenden Ansprüche, **dadurch gekennzeichnet, dass** die Trennwand (63) eine Drosselstelle (59) aufweist, die den einen unteren Kolbenraum (57) des mit dem Speicherkolben (63) gebildeten Kolbenspeichers mit dem Filtratraum (51) fluidführend verbindet.

## Claims

1. Filter device with a plurality of filter elements (21), which can be received in a filter housing (1) with a filter inlet (11) for fluid to be filtered and a filter outlet (13) for the filtered fluid, at least one of the filter elements (21) being able to be backwashed during operation of the device to clean its active filter surface by means of a backwashing apparatus, which contains a pressure control apparatus (7) to support backwashing, the filter elements (21) each being received in an element housing (30), said element housing (30), with the filter elements (21) performing the filtration operation, being connected by their one open end (33) in a fluid-conveying manner to the filter outlet (13), the element housing (30) of each filter element (21) that can be backwashed being connected by its open end (33) exclusively to the pressure control apparatus (7), **characterised in that** all filter elements (21) with their element housings (30) are mounted on their ends in rotary receptacles (19) in a filtrate chamber (51), said receptacles being able to be moved from a filtration position into a backwashing position and back into a filtration position by means of a rotary drive (25), **in that** a partition wall (53) is drawn in the filter housing (1) between the pressure control apparatus (7) and the filtrate chamber (51) with the rotary receptacles (19), said wall comprising a passage (55), with which the filter element provided for a backwashing operation is aligned, and **in that** the pressure control apparatus comprises a storage part (7) with a pressure chamber (65) that can be filled with a working gas and a fluid chamber (57) that receives a backwashing volume.

2. Filter device according to claim 1, **characterised in that** the respective element housings (30) are formed by a hollow cylinder (31) with a closed lateral surface and comprise, at their other free end (35), an opening (43) delimited by the respective received filter element (21).

3. Filter device according to either claim 1 or claim 2, **characterised in that** the respective filter element (21) has a conical shape and has its smallest diameter in the direction of the pressure control apparatus (7).

4. Filter device according to any one of the preceding claims, **characterised in that** the flow chamber (49) between the element housing (30) and the received filter element (21) widens conically in the direction of the pressure control apparatus (7) and **in that** the free cross-section of the flow chamber (49) at the top end of the respective filter element (21) amounts to 50 to 120%, preferably 100%, of the inlet surface of the element cap (43) of the filter element (21).

5. Filter device according to any one of the preceding claims, **characterised in that** flow passes from the inside of the filter elements (21) performing the filtration operation to the outside and said filter elements are connected at the bottom to a shared unfiltered medium chamber (47) in the filter housing (1), the filter inlet (11) leading into said unfiltered medium chamber, and **in that**, when the top end (46) of the filter element (21) is closed, the flow chamber (49) located on the outside thereof leads via the top, open end (33) of the element housing (30) into a shared filtrate chamber (51), which is connected to the filter outlet (13).

6. Filter device according to any one of the preceding claims, **characterised in that** the flow passes from the outside of the respective filter element (21) performing the backwashing operation to the inside and the top of said filter element is connected, with its element housing (30), to the pressure control apparatus (7) and the bottom of said filter element is connected via the free element end (35) in a fluid-conveying manner to a dirt discharge valve (17).

7. Filter device according to any one of the preceding claims, **characterised in that** the rotary receptacles (19) that can be pivoted by means of the rotary drive (25), with the filter elements (21) and their element housings (30), are concentric and received at a pre-definable distance in the filtrate chamber (51) of the filter housing (1).

8. Filter device according to any one of the preceding claims, **characterised in that** the storage part (7) is designed as a piston accumulator with an accumulator piston (63) forming a movable partition element between the pressure chamber (65) and the fluid chamber (57).

9. Filter device according to any one of the preceding claims, **characterised in that** the partition wall (63) comprises a restrictor (59), which connects the one lower piston chamber (57) of the piston accumulator formed with the accumulator piston (63) to the filtrate chamber (51) in a fluid-connecting manner.

## Revendications

1. Installation de filtration comprenant une pluralité d'éléments (21) de filtre, qui peuvent être reçus dans une enveloppe (1) de filtre ayant une entrée (11) de filtre pour du fluide à filtrer et une sortie (13) de filtre pour le fluide filtré, dans laquelle, pendant le fonctionnement de l'installation au moins l'un des éléments (21) de filtre peut, pour nettoyer sa surface filtrante active, être lavé en retour au moyen d'un dispositif de lavage en retour, qui comporte un dispositif (7) de commande de la pression pour venir à l'appui du lavage en retour, dans laquelle les éléments (21) de filtre sont reçus chacun dans une enveloppe (30) d'élément, dans laquelle les enveloppes (30) d'élément ayant les éléments (21) de filtre prenant en charge l'opération de filtration sont en liaison fluidique avec la sortie (13) de filtre par leur une extrémité (33) ouverte, dans laquelle l'enveloppe (30) d'élément de l'élément (21) de filtre respectif lavable en retour est raccordée par sa une extrémité (33) ouverte exclusivement au dispositif (7) de commande de la pression,
**caractérisée en ce que** tous les éléments (21) de filtre sont montés par leurs enveloppes (30) d'élément du côté de l'extrémité dans des logements (19) tournants dans un espace (51) de filtrat, qui peuvent, au moyen d'un entraînement (25) en rotation, passer d'une position de filtration à une position de lavage en retour et revenir à une position de filtration, **en ce que** entre le dispositif (7) de commande de la pression et l'espace (51) de filtrat ayant les logements (9) tournants est tirée dans l'enveloppe (1) de filtre une cloison (53), qui a un passage (55), sur lequel l'élément (21) de filtre prévu pour une opération de lavage en retour est dirigé, et **en ce que** le dispositif de commande de la pression a une partie (7) d'emmagasinage, ayant un espace (65) sous pression pouvant être rempli de gaz de travail et un espace (57) de fluide pouvant recevoir une quantité de lavage en retour.

2. Installation de filtration suivant la revendication 1, **caractérisée en ce que** les enveloppes (30) respectives d'élément sont constituées d'un cylindre (31) creux à surface latérale fermée et ont à leur autre extrémité (35) libre une ouverture (43) délimitée par l'élément (21) de filtre reçu respectivement.

3. Installation de filtration suivant la revendication 1 ou 2, **caractérisée en ce que** l'élément (21) de filtre respectif est de constitution conique et a son diamètre le plus petit dans la direction du dispositif (7) de commande de la pression.

4. Installation de filtration suivant l'un des revendications précédentes, **caractérisée en ce que** l'espace (49) d'écoulement entre l'enveloppe (30) d'élément et l'élément (21) de filtre reçu s'élargit coniquement en direction du dispositif (7) de commande de la pression et **en ce que** la section transversale libre de l'espace (49) d'écoulement à l'extrémité supérieure de l'élément (21) respectif de filtre représente de 50 à 120 %, de préférence 100 %, de la surface d'entrée de la coiffe (43) de l'élément (21) de filtre.

5. Installation de filtration suivant l'une des revendications précédentes, **caractérisée en ce que** les éléments (21) de filtre, prenant en charge l'opération de filtration, sont parcourus chacun de l'intérieur vers l'extérieur et sont raccordés du côté du fond à un espace (47) commun de non filtrat de l'enveloppe (1) de filtre, espace dans lequel débouche l'entrée (11) de filtre et **en ce que**, lorsque l'extrémité (46) de tête de l'élément (21) de filtre est fermée, l'espace (49) d'écoulement, se trouvant sur son côté extérieur, débouche par l'extrémité (33) ouverte supérieure de l'enveloppe (30) de l'élément dans un espace (51) commun de filtrat, qui est raccordé à la sortie (13) du filtre.

6. Installation de filtration suivant l'une des revendications précédentes, **caractérisée en ce que** l'élément (21) de filtre respectif, prenant en charge l'opération de lavage en retour, est parcouru de l'extérieur vers l'intérieur et est raccordé par son enveloppe (30) d'élément du côté de la tête au dispositif (7) de commande de la pression, ainsi que raccordé fluidiquement du côté du fond par l'extrémité (35) libre de l'élément à une soupape (17) d'évacuation des impuretés.

7. Installation de filtration suivant l'une des revendications précédentes, **caractérisée en ce que** les logements (19) tournants, pouvant pivoter au moyen de l'entraînement (25) en rotation et ayant les éléments (21) de filtre outre leurs enveloppes (30) d'élément, sont reçus concentriquement et à une distance pouvant être donnée à l'avance dans l'espace (51) de filtrat de l'enveloppe (1) du filtre.

8. Installation de filtration suivant l'une des revendications précédentes, **caractérisée en ce que** la partie (7) d'emmagasinage est constituée sous la forme d'un accumulateur à piston, ayant un piston (63) d'accumulateur formant un élément de séparation mobile entre l'espace (65) sous pression et l'espace (57) pour du fluide.

9. Installation de filtration suivant l'une des revendications précédentes, **caractérisée en ce que** la cloison (63) a un point (59) d'étranglement, qui met en communication fluidique le un espace (57) inférieur de l'accumulateur à piston, formé par le piston (63) de l'accumulateur, avec l'espace (51) de filtrat.
